# EUROPÄISCHE PATENTANMELDUNG

(11) **EP 1 873 511 A2**
(43) Veröffentlichungstag der Anmeldung: **02.01.2008**
(21) Anmeldenummer: 07107150.0
(22) Anmeldetag: 27.04.2007
(51) Int. Cl.: G01N 15/06

(54) **Anordnung aus einem partikelfilter und einem sensor zur resistiven bestimmung von konzentrationen leitfähiger partikel in gasen**

(30) Priorität: 26.06.2006 DE 102006029214
(71) Anmelder: ROBERT BOSCH GMBH, 70442 Stuttgart (DE)
(72) Erfinder: Handler, Torsten, 70435, Stuttgart (DE); Kamp, Bernhard, 71640, Ludwigsburg (DE); Schittenhelm, Henrik, 70182, Stuttgart (DE); Baars, Enno, 70839, Gerlingen (DE)

(57) **Zusammenfassung**

Die Erfindung betrifft eine Anordnung aus einem Partikelfilter für leitfähige Partikel in Gasgemisch-Strömen mit einer Heizeinrichtung zur thermischen Regeneration des Partikelfilters; und einem Sensor zur resistiven Bestimmung von Konzentrationen leitfähiger Partikel in Gasen, der stromabwärts des Partikelfilters im Gasgemisch-Strom angeordnet ist, und wobei der Sensor eine dem Gasgemisch-Strom ausgesetzte Oberfläche mit mindestens zwei Elektroden aufweist, die beabstandet zueinander auf der Oberfläche angeordnet sind, dergestalt, dass sich leitfähige Partikel aus dem Gasgemisch-Strom auf der Oberfläche des Sensors ablagern, den Abstand zwischen den Elektroden überbrücken und auf diese Weise eine leitende Verbindung zwischen den Elektroden des Sensors herstellen, aus der eine Messgröße für die Konzentration der leitfähigen Partikel in dem Gasgemisch ableitbar ist. Die Anordnung ist dadurch gekennzeichnet, dass Partikelfilter und Sensor so zueinander angeordnet sind, dass die Heizeinrichtung zur thermischen Regeneration des Partikelfilters auch für eine thermische Regeneration des Sensors verwendbar ist.

## Beschreibung

Die vorliegende Erfindung betrifft eine Anordnung aus einem Partikelfilter für leitfähige Partikel in Gasgemisch-Strömen und einem Sensor zur resistiven Bestimmung von Konzentrationen leitfähiger Partikel in Gasen.

### Stand der Technik

Um den Partikelausstoß eines Dieselmotors zu reduzieren, kommen seit jüngerer Zeit Russpartikelfilter zu Einsatz. Zur Überwachung der Wirksamkeit dieser Filter ist es denkbar, Sensoren einzusetzen, die den Partikelgehalt der den Filter passierenden Abgase messen ("On Bord Diagnose", OBD).

Hierbei kann als Sensortyp ein resistiver Partikelsensor zum Einsatz kommen, der als Messgröße die Widerstands- bzw. Impedanzänderung einer interdigitalen Elektrodenstruktur durch Anlagerung von (leitfähigen) Russpartikeln aus dem Abgasstrom heranzieht.

Aufgrund seiner Funktionsweise ordnet sich der resistive Partikelsensor bei den sammelnden Prinzipien ein (vgl. z.B. DE 101 49 333 A1, WO 2003/006976 A2). Derzeit sind resistive Partikelsensoren bekannt, bei denen zwei oder mehrere metallische Elektroden ausgebildet sind, wobei die sich anlagernden Teilchen, insbesondere Russpartikel, die kammartig ineinander greifenden Elektroden kurzschließen und so mit steigender Partikelkonzentration auf der Sensorfläche ein abnehmender Widerstand oder eine abnehmende Impedanz (bzw. ein zunehmender Strom bei konstanter angelegter Spannung) zwischen den Elektroden messbar wird. Der gemessene Strom bzw. dessen Änderung kann mit der angelagerten Partikelmasse und damit auch mit der im Abgas vorherrschenden Partikelkonzentration korreliert werden. Übersteigt die Partikelkonzentration ein gewisses Maß, ist dies ein Zeichen dafür, dass der Partikelfilter defekt ist. Der Partikelsensor gibt daher, wenn die Partikelkonzentration das erwähnte Maß überschreitet, ein Signal ab, aufgrund dessen der Filter regeneriert wird. Dabei wird der Filter i. d. R über ein integriertes Heizelement so stark erhitzt, dass die in dem Filter zurückgehaltenen Russpartikel zu Kohlendioxid verbrannt werden. Sinkt die Partikelkonzentration nach der Regeneration nicht wieder ab, ist der Filter voraussichtlich defekt.

Zur Regeneration des Sensorelementes nach der Partikelanlagerung muss das Sensorelement freigebrannt werden. Hierfür ist ein eigens vorgesehenes Heizelement erforderlich, das den technischen Aufwand für einen solchen Sensor erhöht und ihn gleichzeitig störungsanfällig macht.

### Offenbarung der Erfindung

Aufgabe der vorliegenden Erfindung ist es, eine Anordnung aus einem Partikelfilter und einem resistiven Partikelsensor bereit zu stellen, die im Gegensatz zu den aus dem Stand der Technik bekannten Anordnungen einen geringeren Fertigungsaufwand verursacht und insbesondere eine geringere Störungsanfälligkeit aufweist.

Diese Aufgabe wird mit den Merkmalen des vorliegenden Anspruchs 1 gelöst. Die Unteransprüche geben bevorzugte Ausführungsformen an.

Demnach ist eine Anordnung aus einem Partikelfilter für leitfähige Partikel in Gasgemisch-Strömen mit einer Heizeinrichtung zur thermischen Regeneration des Partikelfilters und einem Sensor zur resistiven Bestimmung von Konzentrationen leitfähiger Partikel in Gasen, der stromabwärts des Partikelfilters im Gasgemisch-Strom angeordnet ist, vorgesehen.

Der Sensor weist eine dem Gasgemisch-Strom ausgesetzte Oberfläche mit mindestens zwei Elektroden auf, die beabstandet zueinander auf der Oberfläche angeordnet sind, und zwar dergestalt, dass sich leitfähige Partikel aus dem Gasgemisch-Strom auf der Oberfläche des Sensors ablagern, den Abstand zwischen den Elektroden überbrücken und auf diese Weise eine leitende Verbindung zwischen den Elektroden des Sensors herstellen, aus der eine Messgröße für die Konzentration der leitfähigen Partikel in dem Gasgemisch ableitbar ist.

Die Anordnung aus Partikelfilter und resistivem Sensor ist dadurch gekennzeichnet, dass beide so zueinander angeordnet sind, dass die Heizeinrichtung zur thermischen Regeneration des Partikelfilters auch für eine thermische Regeneration des Sensors verwendbar ist. Dies bedeutet, dass eine eigene Heizeinrichtung für den Sensor verzichtbar ist.

Thermische Regeneration bedeutet, dass die von dem Partikelfilter aus dem Gasgemisch aufgefangenen leitfähigen Partikel, insbesondere Russpartikel, durch Erhitzung des Filters zu Kohlendioxid verbrannt werden, wobei letzteres als Gas aus dem Filter entweicht. Auf diese Weise wird der Filter von Rückständen entleert und so regeneriert.

Die erfindungsgemäße Art der Anordnung ist deshalb möglich, weil bei einem intaktem Partikelfilter neuester Bauart aufgrund der hohen Filterwirkungsgrade die den Filter passierende Partikelmenge äußerst gering ist, so dass bei geeigneter Auslegung des resistiven Sensors dieser in dem Zeitbereich zwischen zwei Regenerationszyklen des Partikelfilters praktisch ausschließlich ein Nullsignal liefert und damit die Intaktheit des Partikelfilters anzeigt.

Bei Partikelfiltern mit geringerem Wirkungsgrad konnte es hingegen vorkommen, dass eine Regeneration des Sensors häufiger als eine Regeneration des Filters erforderlich war. Aus diesem Grunde weisen resisitive Sensoren aus dem Stand der Technik stets ein eigenes Heizelement auf. Die vorliegende Erfindung zeigt eine technische Lehre auf, nach der es möglich ist, auf ein eigenes Heizelement im Sensor zu verzichten.

Bei einem teildefekten Filter ist die den Filter passierende Partikelmenge zwischen zwei Regenerationszyklen so groß, dass bei geeigneter Auslegung des resistiven Sensors nach einer gewissen Zeit ein Strom gemessen werden kann. Die Höhe des Stromes bzw. die Geschwindigkeit des Stromanstieges oder die zeitliche Dauer nach Vollregeneration bis zum Erreichen einer definierten Signalhöhe kann dabei als Maß für den noch existierenden Filterwirkungsgrad herangezogen werden.

Die von dem resistiven Sensor erfasste Messgröße kann einerseits die Zeit sein, die vergeht, bis dass durch die angelagerten leitfähigen Partikel ein leitfähiger Kontakt zwischen den beiden Elektroden hergestellt ist, der Widerstand bzw. die Impedanz sich bei einer angelegten Spannung also von unendlich auf einen endlichen Wert reduziert. Je größer dabei der Abstand zwischen den beiden Elektroden (bzw. je kleiner die im Abgas vorhandene Russkonzentration) ist, desto länger dauert es, bis dieser Kontakt hergestellt ist, bzw. desto mehr leitfähige Partikel sind erforderlich. Ein Sensor, der einen großen Abstand zwischen den beiden Elektroden aufweist, hat also eine geringere Empfindlichkeit als ein Sensor, der einen kleineren Abstand zwischen den beiden Elektroden aufweist.

Andererseits kann als Messgröße auch der absolute Widerstands- oder Impedanzwert herangezogen werden, der ein reziprokes Maß für die Menge der angelagerten Russpartikel ist.

In einer bevorzugten Ausgestaltung der erfindungsgemäßen Anordnung ist vorgesehen, dass die Oberfläche des Sensors aus einem nichtleitenden keramischen Material besteht. Hier kann z.B. Aluminiumoxid zum Einsatz kommen.

In einer besonders bevorzugten Ausgestaltung der erfindungsgemäßen Anordnung ist vorgesehen, dass die Elektroden zueinander in Form von Interdigitalelektroden angeordnet sind. Solche Arten von Elektroden greifen kammartig ineinander und halten zueinander einen konstanten Abstand. Sich auf der Oberfläche ablagernde Russpartikel überbrücken diesen Abstand und schließen - eine ausreichend hohe Konzentration im Gas vorausgesetzt - nach einer gewissen Zeit die Elektroden kurz.

Weiterhin ist besonders bevorzugt, dass die Elektroden mittels Siebdrucktechnik auf die Oberfläche des Sensors aufgebracht sind. Diese Technik ermöglicht es, den Abstand zwischen den Elektroden auf 50 µm zu reduzieren. Noch geringere Abstände zwischen den Elektroden können mit photolithographischen Verfahren erzielt werden, die aber aus Kostengründen nicht bevorzugt verwendet werden. Weitere mögliche Verfahren zur Aufbringung der Elektroden auf die Oberfläche sind z.B. Schablonendruck, Tampondruck, Tintenstrahldruck oder ein Transferfilmverfahren.

In einer weiteren bevorzugten Ausgestaltung der erfindungsgemäßen Anordnung ist vorgesehen, dass es sich bei den zu bestimmenden leitfähigen Partikeln um Russpartikel handelt. Ebenso ist bevorzugt vorgesehen, dass es sich bei dem Sensor um einen Russpartikelsensor handelt, wie er z.B. in Kraftfahrzeugen mit einem Dieselmotor verwendet wird. In diesem Fall handelt es sich bei dem Gasgemisch um ein Verbrennungsgas-Gemisch, und Partikelfilter und Sensor sind im Abgasstrom des Dieselmotors angeordnet.

In einer besonders bevorzugten Ausgestaltung der vorliegenden Erfindung ist vorgesehen, dass der Sensor mindestens zwei Sensorabschnitte mit jeweils mindestens zwei Elektroden aufweist, wobei die Elektroden der mindestens zwei Sensorabschnitte jeweils unterschiedliche Abstände und/oder Konfigurationen aufweisen, die mindestens zwei Sensorabschnitte mit unterschiedlichen Spannungen betrieben werden oder die Elektroden der mindestens zwei Sensorabschnitte unterschiedliche Materialien aufweisen. Auf diese Weise lassen sich verschiedene Messbereiche bzw. Messempfindlichkeiten an den verschiedenen Sensorabschnitten realisieren.

Bei einer Ausgestaltung mit zwei Sensorabschnitten unterschiedlicher Empfindlichkeit könnte der Sensor so ausgelegt sein, dass ein intakter Filter im Verlauf eines regulären Regenerationszyklus weder an dem einen noch an dem anderen Sensorabschnitt ein Signal generiert, wohingegen ein vollständig defekter Filter an beiden Sensorabschnitten ein Signal generiert, und ein teildefekter Filter schließlich an dem empfindlicheren Sensorabschnitt ein Signal generiert, nicht jedoch an dem weniger empfindlichen Sensorabschnitt. Auf diese Weise lassen sich in Echtzeit recht genaue Aussagen über die Beschaffenheit des Filters treffen.

Es ist weiterhin ein Verfahren zur Überwachung der Partikelkonzentration im Abgasstrom eines Verbrennungsmotors vorgesehen, aufweisend eine Anordnung aus einem Partikelfilter und einem stromabwärts gelegenen Sensor gemäß einem der vorherigen Ansprüche. Das Verfahren ist dadurch gekennzeichnet, dass eine von dem Sensor gemessene bzw. generierte elektrische Größe als Messgröße für den Wirkungsgrad des Partikelfilters verwendet wird.

Bei dieser Messgröße kann es sich z.B. um einen Widerstand bzw. eine Impedanz handeln, aber auch um den bei einer angelegten Spannung gemäß dem Ohmschen Gesetz fließenden elektrischen Strom. Ebenso kann als Messgröße auch die Zeit bis zum Erreichen eines kritischen Widerstands, einer kritischen Impedanz oder eines kritischen elektrischen Stroms sein.

Wie bereits erwähnt, ist bei einem intakten Partikelfilter jüngerer Bauart aufgrund des hohen Filterwirkungsgrads die den Filter passierende Partikelmenge äußerst gering, so dass bei geeigneter Auslegung des resistiven Sensors dieser in einem Zeitbereich zwischen zwei Regenerationszyklen des Partikelfilters ausschließlich ein Nullsignal liefert, also z.B. einen unendlich hohen Widerstand bzw. eine unendlich hohe Impedanz oder einen nicht messbaren Strom, und damit die Intaktheit des Partikelfilters anzeigt.

In einer bevorzugten Ausgestaltung dieses Verfahrens ist vorgesehen, dass bei Über- oder Unterschreiten einer von dem Sensor generierten Messgröße eine thermische Regeneration des Partikelfilters eingeleitet wird, die auch zur thermischen Regeneration des Sensors führt.

Dies bedeutet, dass der Sensormesszyklus an den Messzyklus des Partikelfilters gekoppelt ist. Dies ist aufgrund der inzwischen erzielbaren hohen Filterwirkungsgrade problemlos möglich, da in der Regel die Regeneration eines intakten Filters zu einem Zeitpunkt erforderlich ist, zu dem der Sensor noch ein Nullsignal liefert, da sich noch nicht ausreichend viele Russpartikel angelagert haben.

### Zeichnungen

Die vorliegende Erfindung wird durch die im Folgenden gezeigten und diskutierten Figuren genauer erläutert. Dabei ist zu beachten, dass die Figuren nur beschreibenden Charakter haben und nicht dazu gedacht sind, die Erfindung in irgendeiner Form einzuschränken.

Es zeigen:
- Fig. 1: den vereinfachten Aufbau eines Partikelsensors, wie er in einer erfindungsgemäßen Anordnung eingesetzt wird;
- Fig. 2: die Sensorsignale für einen intakten und zwei teildefekte Partikelfilter mit unterschiedlichen Wirkungsgraden; und
- Fig. 3: die Variante eines Sensors einer erfindungsgemäßen Anordnung mit zwei Sensorabschnitten auf der Vorder- und Rückseite des Keramikelements.

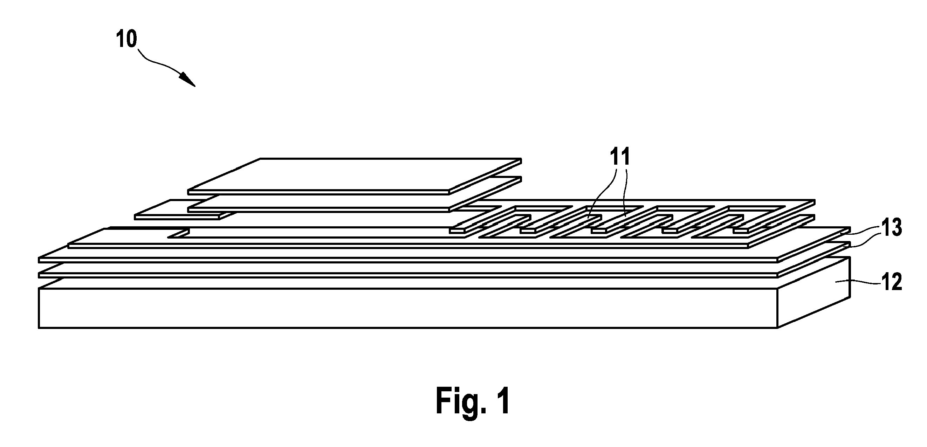

Fig. 1 zeigt einen erfindungsgemäßen Sensor 10 mit einer paarigen Elektrode 11, die auf der Oberfläche eines Trägermaterials 12 angeordnet ist. Zwischen der Elektrode und dem Trägermaterial sind noch eine oder mehrere Isolationsschichten 13 angeordnet, die z.B. aus einem nichtleitenden Lack bestehen können.

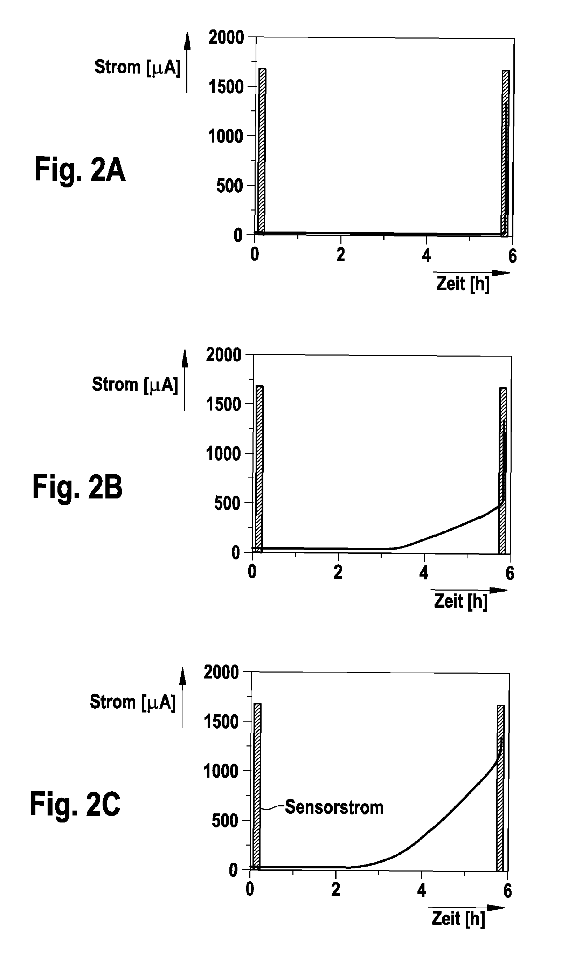

Fig. 2 zeigt das Sensorsignal, vorliegend den sich bei einer angelegten Spannung aufgrund des Widerstandes zwischen den beiden Elektroden ergebenden Strom, für einen intakten (Fig. 2A) und zwei teildefekte Partikelfilter mit unterschiedlichen Wirkungsgraden (Fig. 2B: 70%, Fig. 2C: 50%). Bei einem intakten Partikelfilter ist der gemessene Sensorstrom nur während der Partikelfilter-Regenerationsphasen messbar, ansonsten wird ein Nullsignal gemessen. Für die beiden teildefekten Filter mit Wirkungsgraden von 50 und 70% steigt der Strom nach einer gewissen Zeit an. Der Zeitpunkt des Anstieges sowie die bis zum Erreichen der nächsten Partikelfilter-Regenerationsphase gemessene Stromhöhe kann als ein Maß für den Wirkungsgrad des Filters herangezogen werden.

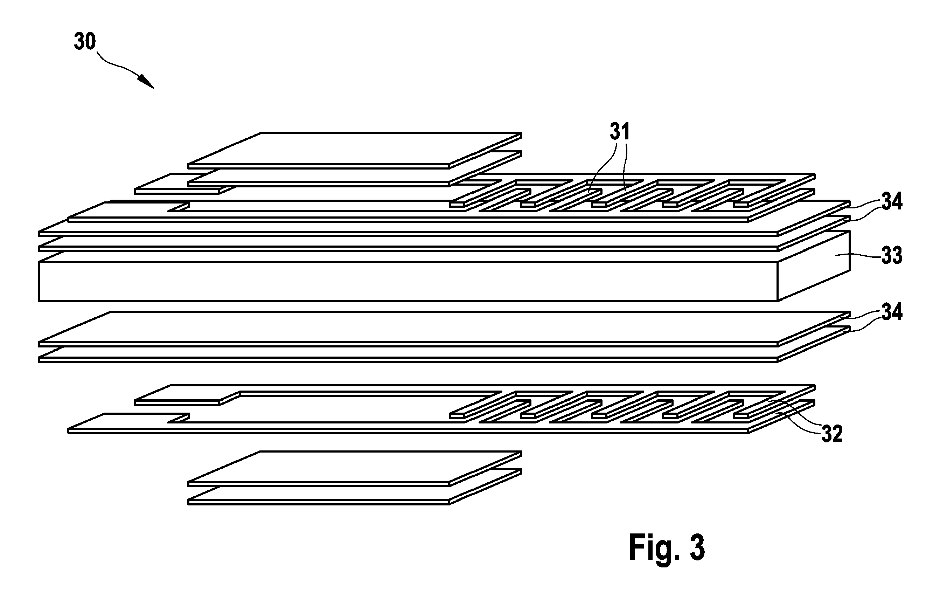

Fig. 3 zeigt einen erfindungsgemäßen Sensor 30 mit zwei Sensorabschnitten 31, 32 auf der Vorder- und Rückseite eines Keramikelements 33. Die beiden Sensorabschnitte weisen unterschiedliche Messempfindlichkeiten auf, was z.B. durch unterschiedliche Elektrodenabstände, Ausführungen, oder Messspannungen bewerkstelligt wird. Zwischen den Elektroden der beiden Sensorabschnitte 31, 32 und dem Trägermaterial sind jeweils eine oder mehrere Isolationsschichten 34 angeordnet, die z.B. aus einem nichtleitenden Lack bestehen können.

In Fig. 3 ist erkennbar, dass der Sensorabschnitt 32 einen gegenüber dem Sensorabschnitt 31 abweichenden Elektrodenabstand aufweist. Hierdurch kann ein Vergleich zwischen zwei unterschiedlichen Empfindlichkeiten getroffen werden, was die Auswertung der Signale erleichtern kann. Zum Beispiel können für einen noch innerhalb des zu tolerierenden Bereichs liegenden teildefekten Filter die Messzellen so ausgelegt werden, dass der erste Sensorabschnitt 31 bereits ein Signal liefert, während der zweite Sensorabschnitt 32 aufgrund der geringeren Empfindlichkeit noch kein Signal liefert. Ein vollständig defekter Filter wäre dann durch ein Signal an beiden Messzellen definiert, während ein intakter Filter in beiden Messzellen kein Signal liefern würde.

## Patentansprüche

1. Anordnung aus einem Partikelfilter für leitfähige Partikel in Gasgemisch-Strömen mit einer Heizeinrichtung zur thermischen Regeneration des Partikelfilters sowie einem Sensor zur resistiven Bestimmung von Konzentrationen leitfähiger Partikel in Gasen, der stromabwärts des Partikelfilters im Gasgemisch-Strom angeordnet ist, und
wobei der Sensor eine dem Gasgemisch-Strom ausgesetzte Oberfläche mit mindestens zwei Elektroden aufweist, die beabstandet zueinander auf der Oberfläche angeordnet sind,
dergestalt, dass sich leitfähige Partikel aus dem Gasgemisch-Strom auf der Oberfläche des Sensors ablagern, den Abstand zwischen den Elektroden überbrücken und auf diese Weise eine leitende Verbindung zwischen den Elektroden des Sensors herstellen, aus der eine Messgröße für die Konzentration der leitfähigen Partikel in dem Gasgemisch ableitbar ist,
**dadurch gekennzeichnet, dass**
Partikelfilter und Sensor so zueinander angeordnet sind, dass die Heizeinrichtung zur thermischen Regeneration des Partikelfilters auch für eine thermische Regeneration des Sensors verwendbar ist.

2. Anordnung gemäß Anspruch 1, **dadurch gekennzeichnet, dass** die Oberfläche des Sensors aus einem nichtleitenden keramischen Material besteht.

3. Anordnung gemäß einem der Ansprüche 1 - 2, **dadurch gekennzeichnet, dass** die Elektroden zueinander in Form von Interdigitalelektroden angeordnet sind.

4. Anordnung gemäß einem der vorherigen Ansprüche, **dadurch gekennzeichnet, dass** die Elektroden mittels Siebdrucktechnik auf die Oberfläche des Sensors aufgebracht sind.

5. Anordnung gemäß einem der vorherigen Ansprüche, **dadurch gekennzeichnet, dass** es sich bei den zu bestimmenden leitfähigen Partikeln um Russpartikel handelt.

6. Anordnung gemäß einem der vorherigen Ansprüche, **dadurch gekennzeichnet, dass** es sich bei dem Sensor um einen Russpartikelsensor handelt.

7. Anordnung gemäß einem der vorherigen Ansprüche, **dadurch gekennzeichnet, dass** es sich bei dem Gasgemisch um ein Verbrennungsgas-Gemisch handelt.

8. Anordnung gemäß einem der vorherigen Ansprüche, **dadurch gekennzeichnet, dass** Partikelfilter und Sensor im Abgasstrom eines Dieselmotors angeordnet ist.

9. Anordnung gemäß einem der vorherigen Ansprüche, **dadurch gekennzeichnet, dass** der Sensor mindestens zwei Sensorabschnitte mit jeweils mindestens zwei Elektroden aufweist, wobei
(a) die Elektroden der mindestens zwei Sensorabschnitte jeweils unterschiedliche Abstände und/oder Konfigurationen aufweisen;
(b) die mindestens zwei Sensorabschnitte mit unterschiedlichen Spannungen betrieben werden; oder
(c) die Elektroden der mindestens zwei Sensorabschnitte unterschiedliche Materialien aufweisen.

10. Verfahren zur Überwachung der Partikelkonzentration im Abgasstrom eines Verbrennungsmotors, aufweisend eine Anordnung aus einem Partikelfilter und einem stromabwärts gelegenen Sensor gemäß einem der vorherigen Ansprüche, **dadurch gekennzeichnet, dass** eine von dem Sensor gemessene bzw. generierte elektrische Größe als Messgröße für den Wirkungsgrad des Partikelfilters verwendet wird.

11. Verfahren gemäß Anspruch 10, **dadurch gekennzeichnet, dass** bei Über- oder Unterschreiten einer von dem Sensor generierten Messgröße eine thermische Regeneration des Partikelfilters eingeleitet wird, die auch zu thermischen Regeneration des Sensors führt.
